# EUROPÄISCHE PATENTSCHRIFT

(11) **EP 2 371 718 B1**
(45) Veröffentlichungstag und Bekanntmachung des Hinweises auf die Patenterteilung: **23.01.2013**
(21) Anmeldenummer: 10003341.4
(22) Anmeldetag: 29.03.2010
(51) Int. Cl.: B65B 37/10, B65D 88/68, B65G 65/46

(54) **Schüttgut-Dosiervorrichtung**
Metering device for bulk goods
Dispositif de dosage de produits en vrac

(43) Veröffentlichungstag der Anmeldung: 05.10.2011
(73) Patentinhaber: Linde AG, 80331 München (DE)
(72) Erfinder: Greeb, Herbert, 35684 Dillenburg (DE)
(74) Vertreter: Henrion, Oliver

(56) Entgegenhaltungen:
- CH-A- 355 403
- DE-A1- 4 335 949
- JP-A- 55 140 430
- US-A- 3 896 943

## Beschreibung

Die Erfindung betrifft eine Dosiervorrichtung zum Ausgeben von Schüttgut, insbesondere aus einem Vorratsgefäß wie etwa einem Bunker oder einem Silo.

Gerade bei schwer fließenden Schüttgütern, die zu Verdichtungen und Brückenbildungen neigen, sind zum Austragen des Materials Maßnahmen erforderlich, die beispielsweise den Einsatz einer Austragsschnecke umfassen. Die Austragsschnecke übernimmt dabei den horizontalen Transport des Schüttguts aus dem Silo bzw. dem Bunker und führt das so geförderte Schüttgut der Dosiervorrichtung zu. In der Dosiervorrichtung erfolgt der Materialfluss in vertikaler Richtung, wobei zumeist zur Verhinderung des Stockens des Materialflusses am Boden des Dosierbehälters um eine vertikale Achse rotierende Elemente eingesetzt werden, die das Schüttgut einerseits in Richtung einer Ausgabeöffnung bewegen, andererseits das Schüttgut fließfähig halten. Handelt es sich bei dem Schüttgut um explosionsfähige Stäube, so sind bei der Auslegung der Dosiergefäße die ATEX-Richtlinien zu beachten.

Aus der DE 10 261 395 A1 ist zur Vermeidung einer Brückenbildung des Schüttguts die Anordnung einer abgesetzten Getriebefrontplatte für eine Austragsschnecke in einem Dosiergefäß bekannt, in der zusätzlich Reißzähne an den Schneckenflügeln beschrieben sind, mittels derer verdichtete Schüttgüter besser ausgetragen werden können.

Bei bekannten Dosiervorrichtungen erfolgt die Zufuhr des Schüttguts aus dem Vorratsbehälter horizontal über eine Förderschneckeneinrichtung und der Austrag aus dieser Dosiervorrichtung durch Mitnehmerarme, die über dem Behälterboden rotieren. In diesen Dosiervorrichtungen wird das von oben zufließende Schüttgut von einem Leitkonus nach außen getragen, der zentral um eine Antriebswelle über den rotierenden Austragselementen angeordnet ist, und von diesen den Ausgabeöffnungen zugeführt. Eine Länge dieser Austragselemente hängt von dem Durchmesser des Dosierraumes ab. Die für den Austrag erforderliche Drehzahl der Dosiereinrichtung führt bei den langen Austragelementen zu einer hohen Umfangsgeschwindigkeit > 1 m/s , wodurch entsprechend der ATEX-Richtlinien bei staubförmigen Schüttgütern, die eine explosionsfähige Atmosphäre bilden können, zusätzliche Maßnahmen zum Explosionsschutz getroffen werden müssen.

Ausgehend von diesem Stand der Technik liegt der vorliegenden Erfindung die Aufgabe zu Grunde, eine kompaktere Dosiervorrichtung zum Ausgeben von Schüttgut zu schaffen, deren vertikale Antriebswelle, an der die am Boden rotierenden Austragselemente befestigt sind, mit der erforderlichen hohen Drehzahl betrieben werden kann, ohne dass es zu einer Stockung im Materialfluss oder zu Verdichtungen bei der Dosierung des Schüttgutes kommt. Mit einer verringerten Umfangsgeschwindigkeit können wirksam Zündquellen vermieden werden, so dass die Dosiervorrichtung auch zum Austragen von staubförmigem Schüttgut geeignet ist, das explosionsfähige Atmosphären bilden kann.

Ferner soll die mit den Austragselementen ausgestattete Antriebswelle der Dosiervorrichtung und deren Lager besser vor Verschmutzung durch das Schüttgut, insbesondere durch staubförmiges Schüttgut, und damit vor vorzeitigem Verschleiß und Zerstörung geschützt werden.

Diese Aufgabe wird durch eine Dosiervorrichtung mit den Merkmalen des Anspruchs 1 gelöst.

Weiterbildungen sind in den Unteransprüchen offenbart.

Eine Ausführungsform der Erfindung bezieht sich auf eine Dosiervorrichtung, die zur Ausgabe von Schüttgut vorgesehen ist. Dazu weist die Dosiervorrichtung einen Dosierbehälter auf, der vertikal um eine Rotationsachse angeordnet ist. In dessen oberen Abschnitt, der vorzugsweise zylindrisch ausgebildet ist, erfolgt die Beaufschlagung mit dem Schüttgut aus einem Bunker oder einem Silo mit Hilfe einer Schneckenfördereinrichtung, die sich aus dem Bunker/Silo erstreckt und in diesen oberen Abschnitt des Dosierbehälters mündet. Ferner umfasst die Dosiervorrichtung einen oder mehrere Austragsarme, die oberhalb des Dosierbehälterbodens angeordnet sind und die mittels eines geeigneten Antriebs um die Rotationsachse rotieren können, um das Schüttgut einer Ausgabeöffnung zuzuführen, die in einem unteren Abschnitt des Dosierbehälters zu finden ist.

Erfindungsgemäß ist die Gehäusewandung des Dosierbehälters in dem unteren Abschnitt ausgehend von dem zylindrischen oberen Abschnitt zu dem Boden hin kegelstumpfförmige ausgebildet, so dass sich der Querschnitt des Dosierbehälters deutlich verjüngt. Daher kann der über dem Boden angeordnete Austragsarm deutlich kürzer gestaltet und als Flügel ausgebildet sein, und eine radial von der Rotationsachse weg zu der Wandung hin erstreckende Kante aufweisen, die dem Verlauf der kegelstumpfförmigen Wandung entspricht. Die Ausgabeöffnung zur Beförderung des Schüttgutes nach unten befindet sich dann, zumindest teilweise, in der kegelstumpfförmigen Wandung und erstreckt sich wenigstens bis zum dem Boden hin.

Grundsätzlich könnte die Ausgabeöffnung sich auch von der Wandung in den Boden hinein erstrecken, also über die Kante zwischen Boden und Wandung verlaufen.

Durch den kegelstumpfförmig verjüngten Wandungsabschnitt, zusammen mit den flügelartig ausgebildeten Austragsarmen, die deutlich kürzer sind als Austragsarme aus bekannten Vorrichtungen mit einem gleich bleibenden Dosierbehälterquerschnitt, kann vorteilhaft die Umfangsgeschwindigkeit der Austragsarme von unter einen Meter pro Sekunde sichergestellt werden, ohne dass es im Materialfluss zu Stockungen oder Verdichtungen kommt. Ferner fällt die Dosiervorrichtung nicht unter die ATEX-Richtlinien.

Eine weitere Ausführungsform der Dosiervorrichtung bezieht sich auf eine Verbesserung der Abdichtung der Antriebswelle, die den rotatorischen Antrieb der Austragsarme bereitstellt. Die Antriebswelle ist in der Rotationsachse des Behälters angeordnet und erstreckt sich von unterhalb des Bodens durch eine in dem Boden vorliegende Durchtrittsöffnung und weiter durch den Schüttgutraum hindurch bis hin zu der Schneckenfördereinrichtung. Anstelle der bei bekannten Vorrichtungen üblicher Weise verwendeten Labyrinthdichtungen und Wellendichtringen zwischen den rotierenden Austragsarmen, die fest auf der Antriebswelle sitzen und einem stationär um die Welle angeordneten, die Durchtrittöffnung im Boden verschließenden Flansches, wird erfindungsgemäß eine Gleitringdichtung verwendet, um die Antriebswelle gegenüber dem Flanschelement abzudichten. Die Gleitringdichtung ist dabei zwischen dem Flanschelement, das unterhalb eines Kupplungselements in der Durchtrittöffnung um die Antriebswelle stationär angeordnet ist, und dem Kupplungselement angeordnet, das zur Kupplung des oder der Austragsarme mit der Antriebswelle vorgesehen ist.

In einer bevorzugten Ausführungsform kann einer solches Kupplungselement als Schalenkupplungselement gestaltet sein.

Weitere Ausführungsformen der erfindungsgemäßen Dosiervorrichtung beziehen sich auf eine Kopplung der Antriebswelle mit einer Schneckenwelle der Schneckenfördereinrichtung über ein Kegelradgetriebe.

Ferner können die als Austragsarme fungierenden Flügel der erfindungsgemäßen Vorrichtung trapezförmig ausgebildet sein, insbesondere in Form eines rechtwinkligen Trapezes, bei dem die Kante des Trapezes, die die rechten Winkel aufweist, an der Antriebswelle anliegt, während die davon abgewandte Kante entsprechend dem kegelstumpfförmigen Verlauf zu der Wandung weist.

Alternativ ist die Ausbildung der Flügel auch als stumpfwinkliges L-förmiges Winkelblech denkbar, bei dem ein langer Schenkel des "L" die Kante bildet, die dem kegelstumpfförmigen Verlauf der Wandung folgt.

Diese und weitere Vorteile werden durch die nachfolgende Beschreibung unter Bezug auf die begleitenden Figuren dargelegt.

Der Bezug auf die Figuren in der Beschreibung dient der Unterstützung der Beschreibung. Gegenstände oder Teile von Gegenständen, die im Wesentlichen gleich oder ähnlich sind, können mit denselben Bezugszeichen versehen sein. Die Figuren sind lediglich schematische Darstellungen von Ausführungsbeispielen der Erfindung. Es zeigt:

**Fig. 1** eine Schnittansicht durch eine erfindungsgemäße Dosiervorrichtung mit eingezeichneten Materialflussströmen,

**Fig. 2** eine perspektivische Ansicht der Dosiervorrichtung aus **Fig. 1** im Aufriss,

**Fig. 3a** eine Querschnittansicht des Details A aus **Fig. 1**, das die Wellenabdichtung zeigt,

**Fig. 3b** eine Querschnittansicht einer alternativen Wellenabdichtung nach einer erfindungsgemäßen Ausführungsform,

**Fig. 4** eine perspektivische Ansicht einer Dosiervorrichtung nach dem Stand der Technik,

**Fig. 5** eine Schnittansicht des unteren Teils der Dosiervorrichtung aus **Fig. 4** mit dem Ausgabematerialfluss,

**Fig. 6** eine Querschnittansicht des Details B aus **Fig. 5**, das die Wellenabdichtung nach dem Stand der Technik verdeutlicht,

Grundsätzlich bezieht sich die erfindungsgemäße Dosiervorrichtung auf eine Vorrichtung, mittels derer ein Schüttgut aus einem Vorratsbehälter, wie etwa einem Silo oder einem Bunker, dosiert ausgegeben werden kann. Dabei kann es sich insbesondere auch um schwer fließendes Schüttgut handeln, das zu Verdichtungen und Brückenbildungen neigt, und bei dem zum gleichmäßigen Eintrag in die Dosiervorrichtung eine horizontal angeordnete Förderschneckeneinrichtung zum Einsatz kommt. Zudem soll die Dosiervorrichtung auch staubförmiges Schüttgut dosieren können, das zur Bildung von explosiven Atmosphären neigt, und damit besondere Anforderungen an die Geräte stellt, die die ATEX-Richtlinien erfüllen sollen.

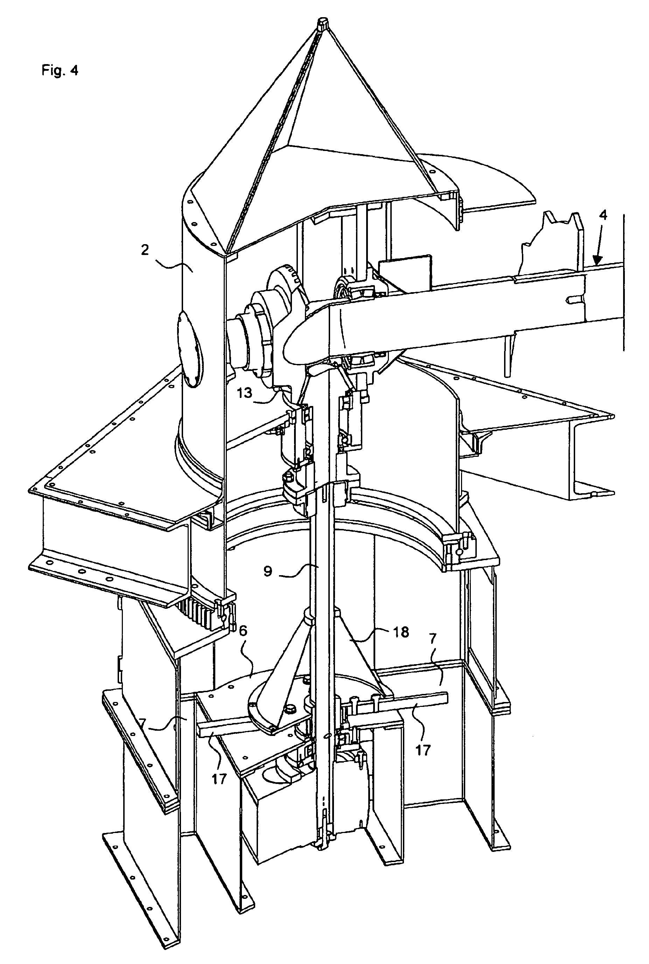

**Fig. 4 bis 6** zeigen eine herkömmliche Vorrichtung nach dem Stand der Technik, die für solche vorgenannten Zwecke eingesetzt wird. Die horizontale Förderschneckeneinrichtung 4, zu sehen in **Fig. 4**, beaufschlagt die Dosiervorrichtung mit dem Schüttgut aus dem jeweiligen nicht dargestellten Vorratsgefäß. Der Austrag aus dieser Dosiervorrichtung erfolgt in dem im Querschnitt aufgeweiteten unteren Abschnitt der Dosiervorrichtung mittels der über den Behälterboden 6 rotierenden Mitnehmerarme 17, die im nachfolgenden auch als Austragsarme bezeichnet werden, und die das von oben zufließende Material, das von dem Leitkonus 18 nach außen getragen wird, den Ausgabeöffnungen 7 zuführen, indem sie das sich auf dem Boden 6 befindliche Material mitnehmen und zu den Ausgabeöffnungen 7 schieben.

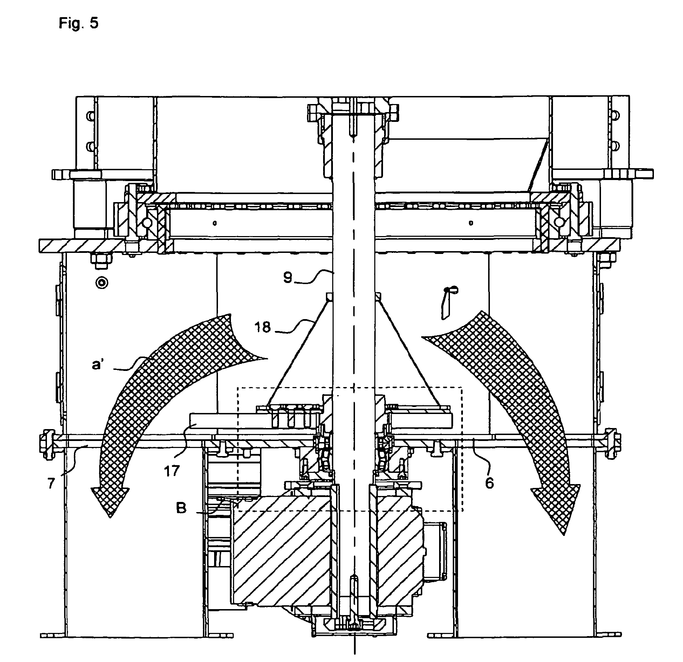

Der Materialfluss a' verläuft dabei, wie in **Fig. 5** zu sehen ist, beidseitig in die Ausgabeöffnungen 7, nachdem das Material von dem an der Antriebswelle 9 angeordneten Leitkonus 18 nach außen getragen und durch die Austragsarme 17 über den Boden 6 in Richtung der Ausgabeöffnungen 7 geschoben wurde.

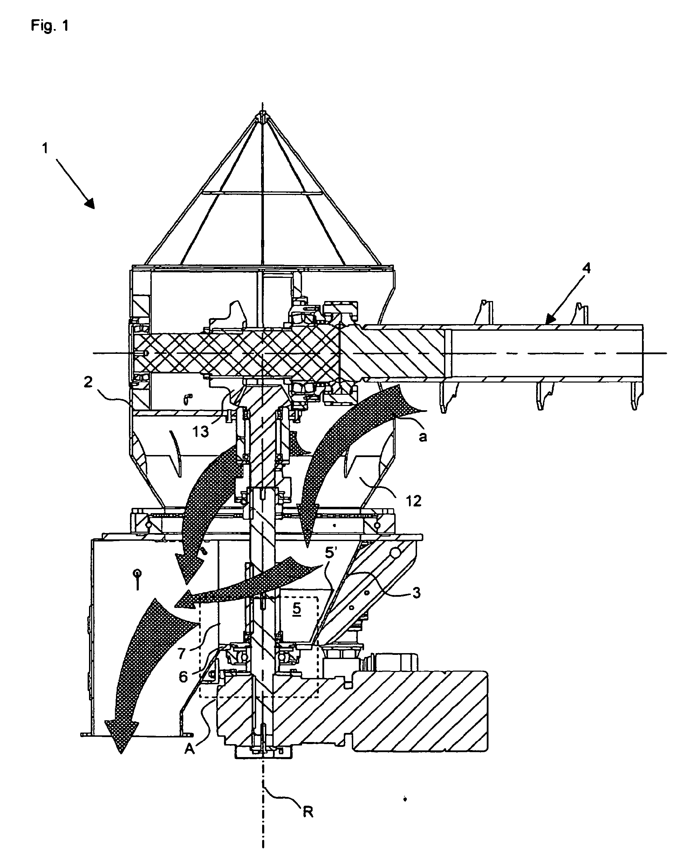

Die in **Fig. 1** gezeigte beispielhafte Ausführungsform einer erfindungsgemäßen Dosiervorrichtung 1 gleicht im oberen Abschnitt 2 der Dosiervorrichtung des Standes der Technik, in der der Materialeintrag aus dem Vorratsbehälter über die Schneckenfördereinrichtung 4 erfolgt. Der Materialfluss erfolgt auch hier vertikal nach unten, so dass im unteren Abschnitt der Dosiervorrichtung der Materialaustrag durch die Austrittsöffnung 7 erfolgen kann.

Die erfindungsgemäße Dosiervorrichtung 1 weist jedoch nur eine Ausgabeöffnung 7 auf, die sich allerdings in dem kegelstumpfförmig verjüngten Wandungsabschnitt 3 befindet. Das durch den Materialraum 12 zufließende Schüttgut, angezeigt durch die Pfeile a, wird so in Folge des verjüngten Gehäuses 3 den Mitnehmerarmen bzw. Austragsarmen 5 zugeführt, die erfindungsgemäß als Flügel, vorliegend als rechtwinkliges Trapez ausgebildet sind und damit quasi wie ein Schaufelrad bzw. Flügelrad aussehen. Die von der in der Rotationsachse R angeordneten Antriebswelle 9 wegweisende Kante 5' des Flügels 5 verläuft parallel zu der kegelstumpfförmigen Wandung 3, so dass das gesamte nach unten fließende Schüttgutmaterial der Ausgabeöffnung 7 zugeführt wird.

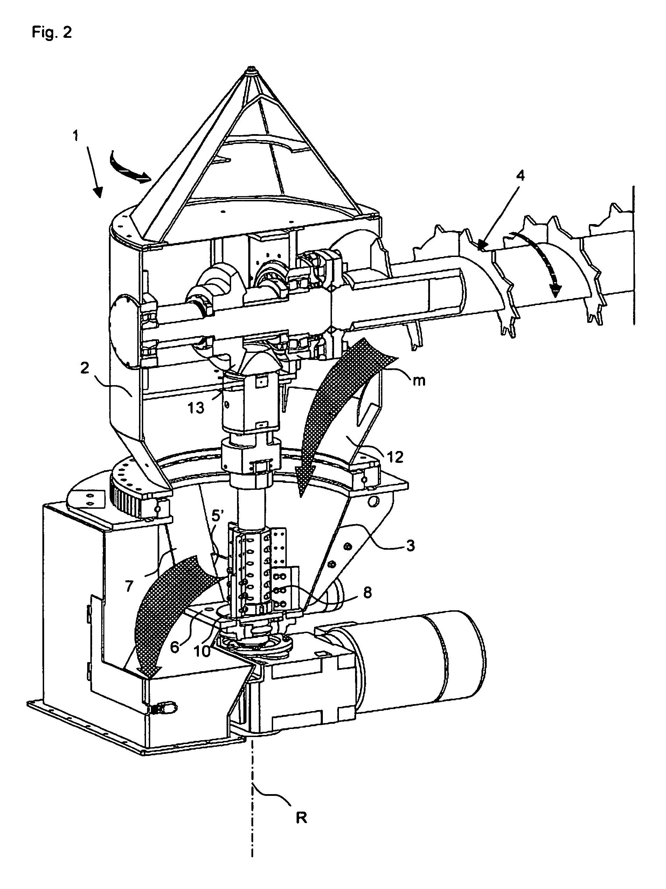

Der Schüttgutraum 12 schließt nach unten mit dem Boden 6, bzw. dem Flansch 10 ab, der in **Fig. 2** zu sehen ist, ferner ist in **Fig. 1** **und** **2** eine Kopplung der Schneckenwelle mit der Antriebswelle 9 über ein Kegelradgetriebe 13 zu sehen.

Eine Befestigung der Austragsflügel 5 an der Antriebswelle 9 kann in einfacher Weise mittels eines Schalenkupplungselements 8, zu sehen in **Fig. 2**, erfolgen, dessen Schalenhälften in einfacher Weise zusammen geschraubt werden können.

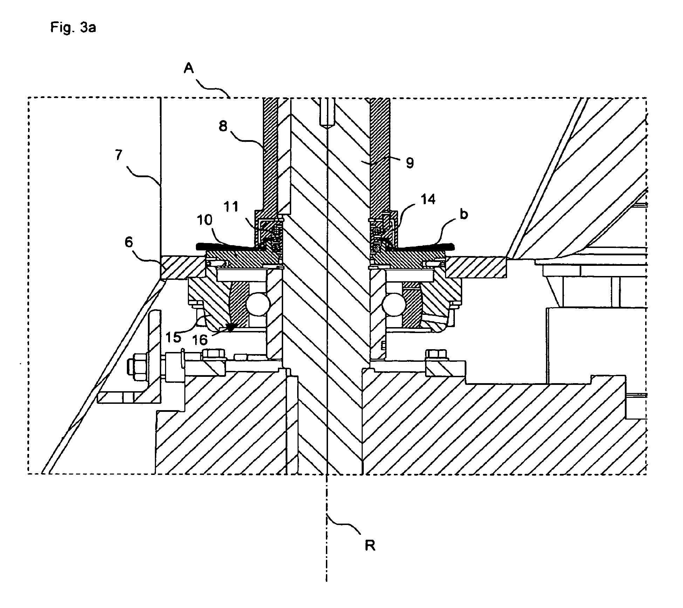

**Fig. 3a** zeigt eine Detaildarstellung des Ausschnitts A aus **Fig. 1**, in der die verbesserte Wellenabdichtung der vorliegenden Erfindung dargestellt ist. Erfindungsgemäß kommt hier eine Gleitringdichtung 11 zum Einsatz, die auch dynamische Dichtung oder Panzerdichtung genannt wird, und die generell die Abdichtung rotierender Wellen gegenüber einer stationären Komponente übernimmt.

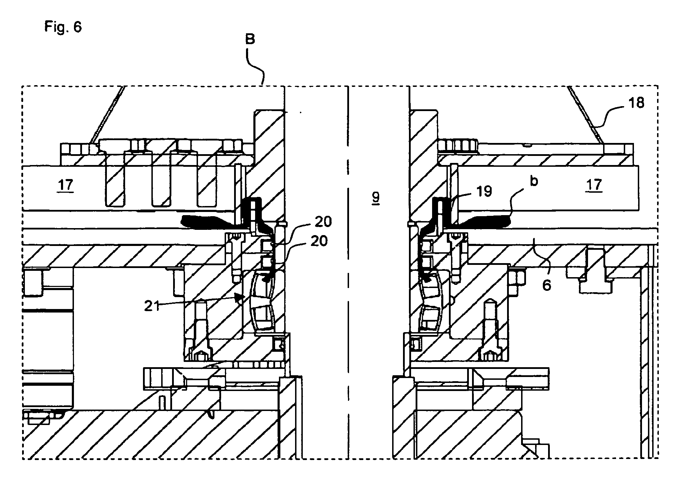

Der dargestellt Störstoffweg b, über den Stäube eindringen können, liegt zwischen dem Schalenkupplungselement 8 und dem Flanschelement 10, das in der Wellen-Durchtrittsöffnung in dem Boden 6 angeordnet ist. Der Störstoffweg b endet an dem Gleitlager 11, dessen plan aneinander anliegende Flächen im Einsatz für eine hervorragende Abdichtung zwischen rotierenden und stationären Komponenten sorgen. Im Gegensatz zu einer herkömmlichen Abdichtung, die in **Fig. 6** mit der vergrößerten Detaildarstellung B aus **Fig. 5** dargestellt ist, in der die Störstoffe den Weg b' durch die Labyrinthdichtung an den Dichtringen 20 vorbei ins Flanschlager 22 finden, ist in der Abdichtung der erfindungsgemäßen Dosiervorrichtung (vgl. **Fig. 3a**) das Flanschlager 16 sowie die Antriebswelle 9 selbst vor eindringendem Staub bzw. Störstoffen geschützt, so dass diese nicht mehr verschmutzen und einem geringerem Verschleiß unterliegen. Hierdurch wird auch der Wartungsaufwand reduziert wird.

Einer der beiden gefederten Gleitringe der Panzerdichtung 11 sitzt mittels eines Stützringes 14, der mit der Schalenkupplung 8 verschraubt ist, rotierend auf der Welle 9, während der zweite, ebenfalls gefederte Gegengleitring stationär im Flanschelement 10, aber auch an der Welle anliegt.

Das Flanschlager 16 liegt in einem Gehäuseabschnitt 15 vor, der mit dem Boden 6 und dem Flanschelement 10 in Verbindung steht.

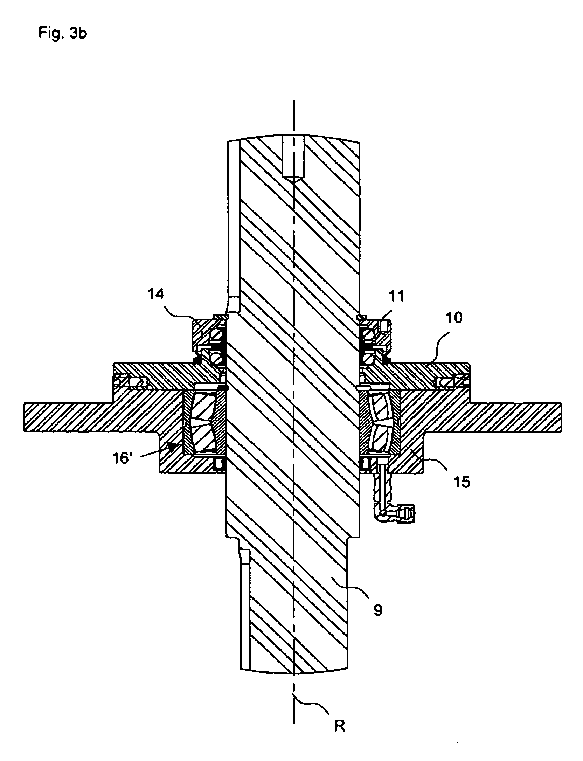

In **Fig. 3b** ist anstatt des Flanschlagers ein alternativ einsetzbares Pendelrollenlager 16' zu sehen.

Aus **Fig. 3a** ist zusätzlich zu entnehmen, dass der Boden 6 auf der Seite der Entnahmeöffnung 7 etwas hinterschnitten ist, so dass der Austrag erleichtert bzw. verbessert wird.

Die offenbarte erfindungsgemäße Dosiervorrichtung ermöglicht durch das kegelstumpfförmige Gehäuse und damit der verkürzten Mitnehmerarme eine verringerte Umfangsgeschwindigkeit unter einem Meter pro Sekunde, so dass keine besonderen Maßnahmen zum Explosionsschutz getroffen werden müssen, und dennoch eine Stockung des Materialflusses vermieden wird.

Ferner werden Wartungsaufwand und Wartungsintervalle durch den Einsatz einer Panzer- bzw. Gleitringdichtung verringert bzw. erhöht, indem Störstoffe bzw. Stäube nicht mehr die Welle sowie das Lager erreichen können.

### Bezugszeichenliste

| | |
|---|---|
| 1 | Dosiervorrichtung |
| 2 | Oberer Behälterabschnitt |
| 3 | Kegelstumpfförmige Wandung des unteren Be-hälterabschnitts |
| 4 | Schneckenfördereinrichtung |
| 5,5' | Flügel-Austragsarm, Kante an der Wandung |
| 6 | Boden |
| 7 | Ausgabeöffnung |
| 8 | Schalenkupplungselement |
| 9 | Antriebswelle |
| 10 | Flansch |
| 11 | Gleitringdichtung |
| 12 | Schüttgutraum |
| 13 | Kegelradgetriebe |
| 14 | Stützring |
| 15 | Lagergehäuse |
| 16,16' | Flanschlager, Pendelrollenlager |
| 17 | Austragsarm |
| 18 | Leitkonus |
| 19 | Labyrinthdichtung |
| 20 | Dichtring |
| 21 | Lager |
| a,a' | Materialfluss |
| b | Störstoffweg |

## Patentansprüche

1. Dosiervorrichtung (1) zum Ausgeben von Schüttgut aus einem vertikal um eine Rotationsachse (R) angeordneten Dosierbehälter, der einen oberen zylindrischen Abschnitt (2) aufweist, in den eine Schüttgut-Schneckenfördereinrichtung (4) mündet, wobei die Vorrichtung (1) zumindest einen Austragsarm (5) umfasst, der um die Rotationsachse (R) rotatorisch angetrieben oberhalb eines Bodens (6) des Dosierbehälters angeordnet ist, um Schüttgut in einem unteren Abschnitt des Dosierbehälters zumindest einer Ausgabeöffnung (7) zuzuführen,
**dadurch gekennzeichnet, dass**
- die Wandung (3) in dem unteren Abschnitt des Dosierbehälters von dem zylindrischen Abschnitt (2) zu dem Boden (6) hin sich kegelstumpfförmig verjüngend ausgebildet ist und zumindest einen Teil der einzigen Ausgabeöffnung (7), die sich zumindest bis zu dem Boden (6) hin erstreckt, aufweist, und
- der zumindest eine Austragsarm (5) als ein Flügel mit einer sich radial von der Rotationsachse (R) weg zu der Wandung (3) hin erstreckenden Kante (5') ausgebildet ist, deren Verlauf der kegelstumpfförmigen Wandung (3) entspricht,
wobei eine Umfangsgeschwindigkeit des Austragsarms (5) unter 1 m/s liegt.

2. Vorrichtung (1) nach Anspruch 1,
**dadurch gekennzeichnet, dass**
der rotatorische Antrieb durch eine in der Rotationsachse (R) angeordnete Antriebswelle (9) bereitgestellt wird, die sich durch eine in dem Boden (6) vorliegende Durchtrittsöffnung von unterhalb des Bodens (6) durch den Schüttgutraum (12) bis zu der Schneckenfördereinrichtung (4) erstreckt,
wobei
- der zumindest eine Austragsarm (5) mittels eines Kupplungselements, insbesondere Schalenkupplungselements (8), mit der Antriebswelle (9) gekoppelt ist, und
- ein Flanschelement (10) unterhalb des Kupplungselements in der Durchtrittsöffnung um die Antriebswelle (9) stationär angeordnet ist, und
- die Antriebswelle (9) gegenüber dem Flanschelement (10) durch eine auf der Antriebswelle (9) zwischen dem Kupplungselement und dem Flanschelement (10) angeordnete Gleitringdichtung (11) abgedichtet ist.

3. Vorrichtung (1) nach Anspruch 2,
**dadurch gekennzeichnet, dass**
die Antriebswelle (9) und eine Schneckenwelle des Schneckenfördereinrichtung (4) über ein Kegelradgetriebe (13) gekoppelt sind.

4. Vorrichtung (1) nach zumindest einem der Ansprüche 1 bis 3,
**dadurch gekennzeichnet, dass**
die Ausgabeöffnung (7) sich von der Wandung (3) in den Boden (6) hinein erstreckt.

5. Vorrichtung (1) nach zumindest einem der Ansprüche 1 bis 4,
**dadurch gekennzeichnet, dass**
- der Flügel als Trapez, insbesondere als rechtwinkliges Trapez, ausgebildet ist,
- der Flügel als stumpfwinkliges L-förmiges Winkelblech ausgebildet ist, wobei der lange Schenkel des "L" die dem kegelstumpfförmigen Verlauf entsprechende Kante (5') bildet.

## Claims

1. A dosing device (1) for outputting bulk goods out of a dosing container, which is arranged vertically about an axis of rotation (R) and which encompasses an upper cylindrical section (2), into which a bulk goods screw conveyor device (4) leads, wherein the device (1) comprises at least one discharge arm (5), which is arranged above a bottom (6) of the dosing container so as to be driven about the axis of rotation (R) in a rotatory manner, so as to supply bulk goods in a lower section of the dosing container to at least one output opening (7),
**characterized in that**
- the wall (3) in the lower section of the dosing container is embodied in a tapered truncated cone-shaped manner from the cylindrical section (2) towards the bottom (6) and encompasses at least a part of the sole output opening (7), which extends at least to the bottom (6), and
- the at least one discharge arm (5) is embodied as a blade comprising an edge (5'), which extends radially away from the axis of rotation (R) towards the wall (3) and the course of which corresponds to the truncated cone-shaped wall (3),
wherein a peripheral speed of the discharge arm (5) is below 1 m/s.

2. The device (1) according to claim 1,
**characterized in that**
the rotatory drive is provided by means of a drive shaft (9), which is arranged in the axis of rotation (R) and which extends from underneath the bottom (6) through the bulk goods space (12) to the screw conveyor device (4) through a passage opening, which is present in the bottom (6), whererein
- the at least one discharge arm (5) is coupled to the drive shaft (9) by means of a coupling element, in particular a sleeve coupling element (8), and
- a flange element (10) is arranged about the drive shaft (9) in a stationary manner underneath the coupling element in the passage opening, and
- the drive shaft (9) is sealed against the flange element (10) by means of a slide ring seal (11), which is arranged on the drive shaft (9) between the coupling element and the flange element (10).

3. The device (1) according to claim 2,
**characterized in that**
the drive shaft (9) and a worm shaft of the screw conveyor device (4) are coupled via a bevel drive (13).

4. The device (1) according to at least any one of claims 1 to 3,
**characterized in that**
the output opening (7) extends from the wall (3) into the bottom (6).

5. The device (1) according to at least any one of claims 1 to 4,
**characterized in that**
- the blade is embodied as a trapezoid, in particular as a rectangular trapezoid,
- the blade is embodied as an obtuse-angled L-shaped angle plate, wherein the long journal of the "L" forms the edge (5'), which follows the truncated cone-shaped course.

## Revendications

1. Dispositif de dosage (1) pour la distribution d'un produit en vrac à partir d'un réservoir de dosage disposé verticalement autour d'un axe de rotation (R), lequel réservoir comprend une section cylindrique supérieure (2) dans laquelle débouche un dispositif convoyeur de produit en vrac à vis (4), le dispositif (1) comprenant au moins un bras de déchargement (5) qui est placé au-dessus d'un fond (6) du réservoir de dosage d'une manière permettant un entraînement en rotation autour de l'axe de rotation (R) pour amener le produit en vrac présent dans une section inférieure du réservoir de dosage vers au moins une ouverture de distribution (7),
**caractérisé en ce que**
- la paroi (3) dans la section inférieure du réservoir de dosage est exécutée en se rétrécissant de la section cylindrique (2) vers le fond (6) de manière à former un cône tronqué et elle comprend au moins une partie de l'unique ouverture de distribution (7) qui s'étend au moins jusqu'au fond (6) et
- l'au moins un bras de déchargement (5) est exécuté comme une aile présentant une arête (5') s'étendant et s'éloignant radialement de l'axe de rotation (R) vers la paroi (3) et dont le profil correspond à la paroi en forme de cône tronqué (3),
la vitesse circonférentielle du bras de déchargement (5) étant inférieure à 1 m/s.

2. Dispositif (1) selon la revendication 1, **caractérisé en ce que**
l'entraînement en rotation est assuré par un arbre d'entraînement (9) disposé dans l'axe de rotation (R) qui s'étend, à travers une ouverture de passage située dans le fond (6), d'un niveau sous le fond (6) jusqu'au dispositif convoyeur à vis (4) en traversant le compartiment de produit en vrac (12),
- l'au moins un bras de déchargement (5) étant accouplé à l'arbre d'entraînement (9) au moyen d'un élément d'accouplement, notamment un élément d'accouplement à manchon (8), et
- un élément de bride (10) placé dans l'ouverture de passage entourant fixement l'arbre d'entraînement (9) sous l'élément d'accouplement et
- l'arbre d'entraînement (9) étant rendu étanche par rapport à l'élément de bride (10) grâce à une garniture étanche à anneau glissant (11) placée sur l'arbre d'entraînement (9) entre l'élément d'accouplement et l'élément de bride (10).

3. Dispositif (1) selon la revendication 2, **caractérisé en ce que** l'arbre d'entraînement (9) et un arbre de vis sans fin du dispositif convoyeur à vis (4) sont accouplés par le biais d'un engrenage à roues coniques (13).

4. Dispositif (1) selon au moins une des revendications 1 à 3, **caractérisé en ce que** l'ouverture de distribution (7) s'étend de la paroi (3) dans le sol (6).

5. Dispositif (1) selon au moins une des revendications 1 à 4, **caractérisé en ce que**
- l'aile est exécutée en tant que trapèze, notamment trapèze à angle droit,
- l'aile est exécutée en tant que tôle angulaire en forme de L à angle obtus, la branche longue du "L" formant l'arête (5') correspondant au profil en forme de cône tronqué.
